# DEMANDE DE BREVET EUROPEEN

(11) **EP 1 800 730 A1**
(43) Date de publication de la demande: **27.06.2007**
(21) Numéro de dépôt: 06291958.4
(22) Date de dépôt: 15.12.2006
(51) Int. Cl.: B01D 46/24, C04B 38/00

(54) **Procede pour produire un filtre ceramique**

(30) Priorité: 21.12.2005 FR 0513064
(71) Demandeur: Institut Français du Pétrole, 92852 Rueil Malmaison Cédex (FR); Ceramiques Techniques et Industrielles s.a., 30340 Salindres (FR)
(72) Inventeur: Becue, Thierry, 69006 Lyon (FR); Joulin, Jean Pierre, 34790 Grabels (FR); Cartoixa, Bruno, 30500 Allegre les Fumades (FR)

(57) **Abrégé**

L'invention concerne un procédé pour produire un filtre céramique en nid d'abeille à partir d'un matériau céramique poreux en nid d'abeille comportant une pluralité de canaux s'étendant à travers lui d'une face d'extrémité à une autre face d'extrémité. Le procédé selon l'invention comporte au moins les étapes consistant a) à munir chaque face d'extrémité du matériau en nid d'abeille d'un film perforé dont les perforations sont telles que les canaux traversant le matériau sont alternativement ouverts à l'une ou l'autre de leurs faces d'extrémité de sorte que, pour chaque canal ouvert à une face d'extrémité, les canaux adjacents sont fermés, et b) à introduire, par aspiration, à travers les perforations du film appliqué à chaque face d'extrémité une matière de bouchage dans les canaux afin d'obtenir un filtre céramique dont les canaux qui ne sont pas bouchés sur l'une des faces d'extrémité le sont sur l'autre face d'extrémité.

## Description

### Domaine technique

La présente invention se rapporte au domaine des matériaux céramiques utilisés pour la filtration d'effluents liquides ou gazeux. Plus précisément, elle se rapporte à un procédé pour produire un filtre céramique à partir d'un matériau céramique poreux en nid d'abeille, ledit filtre pouvant notamment être utilisé comme filtre à particules (FAP) pour les gaz d'échappement des moteurs diesel ou plus spécifiquement comme membrane pour la filtration d'effluents liquides et en particulier de l'eau.

### Art antérieur

Les effluents liquides ou gazeux impurs nécessitent d'être filtrés avant d'être relargués, comme par exemple les effluents hydrocarbonés issus d'unités de raffinage ou de pétrochimie ou les effluents gazeux tels que les gaz d'échappement, ou avant d'être utilisés dans des applications nécessitant des effluents de haute pureté comme par exemple l'eau. Il est connu de filtrer l'eau par séparation tangentielle mise en oeuvre dans des filtres céramiques, généralement appelés membranes dans ce type d'application.
S'agissant des gaz d'échappement des moteurs à combustion interne et notamment ceux des moteurs diesel qui contiennent des suies ou particules polluant l'atmosphère et pouvant entraîner de graves dommages pour la santé, différentes méthodes ont été envisagées pour tenter de résoudre ce problème. On propose notamment de collecter ces particules sur des filtres constitués de matériaux poreux placés sur la ligne d'échappement du moteur. On a décrit déjà dans l'art antérieur des filtres consistant en des monolithes de type nid d'abeille en matériaux réfractaires, tels que la cordiérite ou le carbure de silicium. Ces monolithes comprennent une pluralité de canaux séparés par des parois poreuses, lesdits canaux étant alternativement bouchés à l'une ou l'autre de leurs extrémités de manière à contraindre le flux gazeux à diffuser à travers lesdites parois. Il est connu dans l'état de la technique de réaliser le bouchage alterné des canaux sur chaque face extrême du monolithe par introduction d'une matière de bouchage dans les canaux. La matière de bouchage est généralement introduite sous pression (US 4.559.193, US 4.293.357) et/ou par vibration (US 4.293.357). Le contrôle des propriétés rhéologiques de la matière de bouchage doit être bien maîtrisé car il convient de conserver une viscosité importante pour empêcher que le bouchon ne coule tout en évitant que la/les buse(s) d'injection ne se bouche(nt).
L'objet de la présente invention est de proposer un nouveau procédé de production de filtres céramiques en nid d'abeille à partir d'un matériau céramique poreux en nid d'abeille, en particulier un monolithe, le filtre obtenu grâce au procédé selon l'invention présentant une très bonne adhésion de la matière de bouchage avec les parois du monolithe et en conséquence une excellente tenue des bouchons formés à l'une des extrémités de chacun des canaux.

### Résumé et intérêt de l'invention

L'invention concerne un procédé pour produire un filtre céramique en nid d'abeille à partir d'un matériau céramique poreux en nid d'abeille comportant une pluralité de canaux s'étendant à travers lui d'une face d'extrémité à une autre face d'extrémité. Le procédé selon l'invention comporte au moins les étapes consistant a) à munir chaque face d'extrémité du matériau en nid d'abeille d'un film perforé dont les perforations sont telles que les canaux traversant le matériau sont alternativement ouverts à l'une ou l'autre de leurs faces d'extrémité de sorte que, pour chaque canal ouvert à une face d'extrémité, les canaux adjacents sont fermés, et b) à introduire, par aspiration, à travers les perforations du film appliqué à chaque face d'extrémité une matière de bouchage dans les canaux afin d'obtenir un filtre céramique dont les canaux qui ne sont pas bouchés sur l'une des faces d'extrémité le sont sur l'autre face d'extrémité. Le filtre céramique obtenu selon le procédé de l'invention est avantageusement utilisé comme filtre à particules (FAP) pour les gaz d'échappement des moteurs diesel ou comme membrane pour la filtration d'effluents gazeux ou liquides, en particulier de l'eau.
Selon l'invention, il est avantageux de réaliser la perforation du film recouvrant chaque face d'extrémité du matériau à l'aide d'un faisceau laser polarisé après avoir procédé à une étape numérique de reconnaissance visuelle des faces d'extrémité de manière à déterminer les endroits à perforer. Cette étape numérique de reconnaissance visuelle permet une adaptation rapide à différentes formes de canaux et permet également de traiter les non-conformités (lacunes) présentes dans le réseau du matériau céramique poreux.
La technique d'aspiration comme méthode de pénétration de la matière de bouchage dans les canaux présente l'avantage de créer une dépression dans tous les canaux du matériau céramique poreux et par voie de conséquence une dépression dans la porosité des parois dudit matériau. Cette dépression provoque une aspiration de la suspension contenant la matière de bouchage dans les pores des parois situés à l'interface de la suspension et des parois. Ainsi, le contact entre la suspension contenant la matière de bouchage et les parois est plus intime et, après séchage puis calcination, la meilleure pénétration de la matière de bouchage, généralement un ciment, dans les pores des parois situés à l'interface bouchon - parois provoque une meilleure accroche desdits bouchons et donc une plus grande résistance par rapport à ceux présents dans un filtre obtenu par les procédés antérieurs, en particulier par un procédé consistant à injecter une suspension ou une pâte contenant la matière de bouchage.

### Description

La présente invention a pour objet un procédé pour produire un filtre céramique en nid d'abeille à partir d'un matériau céramique poreux en nid d'abeille comportant une pluralité de canaux s'étendant à travers lui d'une face d'extrémité à une autre face d'extrémité, ledit procédé comportant au moins les étapes consistant à :
a) munir chaque face d'extrémité du matériau en nid d'abeille d'un film perforé dont les perforations sont telles que les canaux traversant le matériau sont alternativement ouverts à l'une ou l'autre de leurs faces d'extrémité, de sorte que, pour chaque canal ouvert à une face d'extrémité, les canaux adjacents sont fermés, et à
b) introduire, par aspiration, à travers les perforations du film appliqué à chaque face d'extrémité une matière de bouchage dans les canaux ouverts afin d'obtenir un filtre céramique dont les canaux qui ne sont pas bouchés sur l'une des faces d'extrémité le sont sur l'autre face d'extrémité.

Selon un mode de réalisation avantageux du procédé selon l'invention, l'étape a) dudit procédé est précédée d'une étape consistant à appliquer sur chacune des faces d'extrémité du matériau céramique un film non-perforé suivie d'une étape consistant à perforer ledit film non-perforé aux endroits voulus. La perforation est alors effectuée lorsque le film est déjà appliqué sur chacune des faces d'extrémité du matériau céramique. Il est également possible d'appliquer directement un film pré-perforé sur chacune des faces d'extrémité.

Selon l'invention, les perforations des films sont réalisées à des endroits correspondant à des canaux donnés débouchant sur les faces d'extrémité du matériau céramique poreux en nid d'abeille. Les perforations des films sont telles que pour chaque canal ouvert à une face d'extrémité, c'est-à-dire non recouvert par le film, les canaux adjacents sont fermés, c'est-à-dire recouvert par le film. De cette manière, les films perforés ou pré-perforés, mis en place sur les faces d'extrémité du matériau céramique, forment un masque sur chacune desdites faces : seuls les canaux ouverts seront obturés par la matière de bouchage au cours de l'étape b) du procédé selon l'invention. Il est également essentiel que les canaux ouverts à l'une des faces d'extrémité soient fermés à l'autre face d'extrémité et inversement de manière à ce que les canaux traversant le matériau céramique soient alternativement ouverts à l'une ou l'autre des faces d'extrémité. Il en résulte qu'après la mise en oeuvre de l'étape b) du procédé selon l'invention, c'est-à-dire de l'introduction d'une matière de bouchage dans les canaux ouverts à chacune des faces d'extrémité du matériau céramique, les canaux qui sont bouchés sur l'une des faces d'extrémité ne le sont pas sur l'autre face, les canaux étant ainsi alternativement bouchés sur l'une ou l'autre des faces d'extrémité du filtre céramique. De cette façon, après retrait du film, par exemple par un retrait mécanique ou par calcination à une température comprise entre 250 et 400°C, à chacune des faces d'extrémité, on obtient un filtre céramique. Ledit filtre céramique est utilisable notamment comme filtre à particules, à l'intérieur duquel on fait circuler un flux gazeux contenant des suies et/ou particules polluantes. Ledit filtre céramique est aussi utilisable comme membrane à l'intérieur de laquelle on fait circuler un flux gazeux ou liquide, préférentiellement liquide et très préférentiellement aqueux, et contenant des matières en suspension organiques ou inorganiques telles que des microorganismes (vers, bactéries, spores...), macromolécules organiques, colloïdes, poussières inorganiques. Quelle que soit l'application envisagée, le flux liquide ou gazeux est introduit à l'entrée des canaux non bouchés d'une face d'extrémité du filtre céramique, diffuse au travers des parois poreuses séparant les canaux et sort par les canaux non bouchés de l'autre face d'extrémité.

Le film appliqué mécaniquement sur les faces d'extrémité du matériau céramique doit être suffisamment résistant pour ne pas être rompu lorsque la matière de bouchage est introduite par aspiration à travers les perforations dudit film. Le film doit aussi résister à la nature chimique de la suspension contenant la matière de bouchage ; en particulier il ne doit pas se dégrader en présence d'eau ou en fonction des conditions acido-basiques de la suspension. Avantageusement, il s'agit d'un film formé d'un matériau polymère, par exemple un polyester. On utilise aussi très avantageusement un film adhésif en polypropylène d'épaisseur de 50 µm ou un film étirable en polyéthylène sur la surface périphérique du matériau céramique pour assurer l'étanchéité et un meilleur vide dans les canaux et la porosité des parois de ces canaux. Selon un mode particulier de réalisation de l'invention, les films sont réalisés en un matériau thermorétractable de manière à ce que chacun des films, une fois appliqués à chacune des faces d'extrémité puissent se chevaucher et se souder lors d'une étape de rétraction se déroulant à une température voisine de 50°C, par exemple en continu dans un four à passage. Le matériau céramique poreux en nid d'abeille se trouve alors placé dans une housse thermorétractable. Il peut s'agir avantageusement d'une housse thermorétractable en polyéthylène d'épaisseur de 120 µm.

Les films appliqués à chacune des extrémités peuvent être perforés par différents moyens. Ils peuvent, par exemple, être perforés au moyen d'au moins une aiguille. L'aiguille est de préférence chauffée à une température comprise entre 50 et 250°C, de préférence entre 75 et 125°C, avant de venir perforer le film d'une manière telle que, pour chaque canal ouvert à une extrémité, les canaux adjacents sont fermés. Lorsque le film est perforé, les aiguilles sont retirées du film. La forme de l'aiguille et/ou l'agencement des aiguilles sont avantageusement adaptées à celle des canaux. Pour réaliser l'étape de perforation, on peut utiliser un système de perforation qui comporte autant d'aiguilles que de perforations à réaliser dans le film. De manière très avantageuse, la perforation du film recouvrant chacune des faces d'extrémité est réalisée par irradiation dudit film aux endroits voulus par un rayonnement énergétique, avantageusement par un rayonnement de type laser et très avantageusement par un rayonnement laser CO₂. Il va de soi que ledit rayonnement énergétique est compatible avec la nature chimique du film à perforer. Un rayonnement laser CO₂ est particulièrement compatible avec un film polyester. Préalablement à l'étape d'irradiation du film, on procède préférentiellement, par une méthode numérique intégrant un algorithme, à une étape de reconnaissance visuelle de la face d'extrémité à perforer à l'aide d'une caméra numérique, notamment à dispositif à transfert de charge (CCD, coupled charged device camera) pour visualiser les canaux à boucher. On utilise avantageusement pour celà un appareillage commercialisé par la société Renaud Lasers dont les caractéristiques sont données dans la demande de brevet FR-A-2.842.131 ou la demande US 2005-205539, le contenu de ces demandes étant incorporé ici par référence. On peut également prévoir de réaliser l'étape de perforation par voie chimique, notamment par dépôt de microgouttelettes aux endroits à perforer sur le film, lesdites microgouttelettes étant formées d'une solution ou d'un solvant tels que l'éther-éthylique, l'acide nitrique concentré ou l'acide sulfurique concentré.

Le matériau céramique poreux en nid d'abeille est préférentiellement un monolithe. Il est parcouru par une pluralité de canaux, parallèles entre eux, s'étendant d'une face d'extrémité à une autre face d'extrémité, les canaux pouvant avoir une section carrée, rectangulaire, triangulaire, hexagonale ou encore polygonale. Tout matériau céramique peut convenir et en particulier la cordiérite, la mullite, le carbure de silicium SiC, le nitrure de silicium, le titanate d'aluminium, le phosphate de zirconium et l'alumine alpha. Il peut s'agir d'un matériau céramique pur, c'est-à-dire formé d'une seule composition céramique ou d'un matériau céramique composite, c'est-à-dire formé de plusieurs compositions céramiques différentes.

Lorsqu'il est utilisé comme filtre à particules, ledit matériau céramique poreux en nid d'abeille présente en général une porosité de 35 à 65 % en volume, de préférence de 40 à 60 % en volume. Préférentiellement, la répartition des pores est essentiellement monopopulée et peut être centrée par exemple entre 5 et 60 micromètres, de préférence entre 10 et 40 micromètres et de manière encore plus préférée entre 15 et 35 micromètres.

Les canaux traversant ledit matériau constituant le filtre sont à chaque face d'extrémité alternativement ouverts ou bouchés de telle manière que pour chaque canal ouvert à une extrémité les canaux adjacents soient bouchés, le flux liquide ou gazeux pénétrant le filtre, obtenu grâce au procédé selon l'invention, étant alors contraint de diffuser à travers les parois poreuses séparant les canaux. Par exemple, dans le cas d'un filtre à particules (FAP) présentant préférentiellement des canaux de section carrée, les faces d'extrémité du monolithe présentent l'aspect d'un damier. Le FAP peut présenter un nombre de canaux d'environ 50 à 500 par pouce carré (soit environ 7,7 à 77,5 canaux par cm²), plus particulièrement d'environ 150 à 300 par pouce carré (soit environ 23,5 à 46,5 canaux par cm²), ce qui correspond approximativement à une section des canaux d'environ de 0,5 à 9 mm², plus particulièrement de 1,5 à 4 mm², compte tenu d'une épaisseur des parois séparant les canaux d'environ 0,2 à 1,5 mm, plus particulièrement de 0,3 à 0,6 mm.

Selon l'invention, la matière de bouchage introduite dans les canaux est une matière thixotrope. Il s'agit de préférence d'un ciment dont la formulation est adaptée aux conditions d'utilisation du filtre céramique, à la formulation et aux propriétés mécaniques du matériau céramique poreux en nid d'abeille. Le ciment, ayant un comportement thixotrope, présente une viscosité instantanée élevée lors de sa mise sous contrainte, laquelle se stabilise entre 10 et 40 Pa.s selon la contrainte, ce phénomène étant réversible. De préférence, le ciment est en mélange avec d'autres éléments, par exemple des additifs, des plastifiants, des surfactants, des liants ou des stabilisants. La préparation de ciment est bien connue de l'Homme du métier. On réalise en général une dispersion de la masse minérale utilisée comme matière pour le ciment, par exemple du carbure de silicium, et une hydrolyse des adjuvants organiques lorsque ceux-ci sont présents dans la formulation finale. Les bouchons formés aux extrémités des canaux de chacune des deux faces d'extrémité du matériau céramique poreux en nid d'abeille sont préférentiellement constitués de 85 à 95% poids d'une chamotte, formée préférentiellement d'au moins 30% de particules présentant une taille moyenne égale au tiers de la taille moyenne des pores du matériau céramique poreux en nid d'abeille, et ayant une formulation identique au matériau céramique poreux en nid d'abeille et de 5 à 15% poids de liants céramiques. De préférence, la matière de bouchage présente un coefficient de dilatation thermique inférieur à celui du matériau céramique poreux en nid d'abeille. Le coefficient de dilatation thermique du matériau céramique poreux en nid d'abeille est avantageusement supérieur de 5% à celui de la matière de bouchage.

Conformément à l'étape b) du procédé selon l'invention, la matière de bouchage, de préférence un ciment, est introduite, par aspiration, à travers les perforations du film d'une première face d'extrémité puis d'une deuxième face d'extrémité, opposée à ladite première face d'extrémité. On plonge d'abord de 2 à 30 mm, de préférence de 3 à 20 mm, d'une première extrémité du matériau céramique dans une suspension contenant la matière de bouchage pour boucher les canaux ouverts d'une première face d'extrémité munie d'un film perforé conformément à l'étape a) du procédé selon l'invention tandis que l'autre extrémité du matériau céramique, opposée à ladite première extrémité, est raccordée à un moyen permettant de créer une dépression dans le matériau céramique et ainsi de réaliser l'aspiration de la matière de bouchage à travers les perforations du film de ladite première face d'extrémité. La dépression dans le matériau céramique est avantageusement créée par l'intermédiaire d'une pompe à vide. De manière générale, un vide primaire allant jusqu'à 10⁻³ bar est suffisant. On peut également envisager de réaliser un vide plus poussé, par exemple un vide secondaire allant jusqu'à 10⁻⁶ bar. La technique de bouchage par aspiration présente l'avantage d'être très simple à mettre en oeuvre et d'être économique ainsi que de s'adapter facilement à tout type de forme de canaux. Lorsque les canaux de la première face d'extrémité sont correctement bouchés, le vide est cassé, l'extrémité du matériau raccordée à un moyen permettant de créer une dépression est libérée dudit moyen. On retire ensuite, par calcination ou mécaniquement, le film de ladite première face d'extrémité. Selon les propriétés rhéologiques de la suspension contenant la matière de bouchage, on peut réaliser un séchage intermédiaire à une température comprise entre 20 et 120 °C, des bouchons formés dans les canaux aux extrémités de la première face avant de procéder à l'introduction, par aspiration, de la matière de bouchage dans les canaux aux extrémités de la deuxième face du matériau céramique poreux en nid d'abeille, de préférence du monolithe. L'opération de bouchage est ensuite répétée sur la deuxième face d'extrémité du matériau d'une manière analogue à celle effectuée pour la première face d'extrémité. La quantité de suspension contenant la matière de bouchage et dans laquelle est plongée chaque face d'extrémité est ajustée au départ de manière à ce que les bouchons, constitués de matière de bouchage introduite de façon alternée dans les canaux de chacune des faces d'extrémité, soient essentiellement localisés sur la portion terminale de chacun des canaux. De préférence, la longueur de chaque bouchon est comprise entre 3 et 10 mm et représente généralement entre 0,1 et 13%, de préférence entre 0,2 et 5% de la longueur du filtre. La longueur du bouchon représente avantageusement de 1 à 5 fois, très avantageusement de 2 à 3 fois, le diamètre inscrit du bouchon.
Avantageusement, la partie superficielle de matière de bouchage débordant de chacune des faces d'extrémité est enlevée. En particulier, la finition des bouchons peut être assurée par une désémailleuse, constituée d'une bande en mousse mise en rotation et dont la partie inférieure trempe dans l'eau.

Conformément à l'étape b) du procédé selon l'invention, on introduit préférentiellement d'abord la matière de bouchage dans les canaux aux extrémités d'une première face d'extrémité, on sèche éventuellement les bouchons ainsi formés dans lesdits canaux, de préférence à une température comprise entre 20 et 120°C, puis on introduit la matière de bouchage dans les canaux aux extrémités de ladite deuxième face d'extrémité, les canaux qui ne sont pas bouchés sur la première face d'extrémité l'étant sur la deuxième face d'extrémité. L'introduction de la matière de bouchage dans les canaux aux extrémités de ladite deuxième face d'extrémité est avantageusement suivie d'une étape de séchage des bouchons à une température comprise de préférence entre 70 et 120°C.
Après la mise en oeuvre de l'étape b) du procédé selon l'invention, il est avantageux de procéder à une étape c) consistant en une étape de cuisson à une température comprise entre 1000°C et 1650°C pour assurer le frittage des bouchons. Cette étape de cuisson est par exemple réalisée dans un four à passage.

Après la mise en oeuvre de l'étape b) et de l'étape c) du procédé selon l'invention, il est avantageux de prévoir l'introduction d'une phase catalytiquement active dans le filtre céramique, en particulier lorsqu'il est utilisé comme filtre à particules.

Conformément au procédé selon l'invention, le matériau céramique poreux en nid d'abeille sous la forme de monolithe utilisé pour produire le filtre céramique a été préalablement extrudé, lesdits extrudés ayant été cuits puis assemblés le cas échéant. En particulier, le matériau céramique poreux en nid d'abeille sous la forme de monolithe peut être fabriqué par tout mode opératoire approprié, comprenant une étape de malaxage des constituants résultant en un produit homogène sous la forme d'une pâte liée, une étape d'extrusion dudit produit à travers une filière appropriée de manière à former ledit matériau sous la forme de monolithe de type nid d'abeille, une étape de séchage puis une étape de cuisson à une température généralement comprise entre 1000°C et 1650°C du monolithe obtenu.
Dans l'étape d'extrusion, on extrude la pâte par exemple sous vide, généralement sous 15 à 20 mm de mercure, dans une extrudeuse à vis (simple vis ou double vis) ou à piston, de manière à obtenir des pains céramiques crus sous forme de monolithe nid d'abeille. Ces pains céramiques crus sont ensuite séchés sous atmosphère à hygrométrie contrôlée, pendant un temps suffisant pour amener leur teneur en eau non liée chimiquement (eau libre) à moins de 1% en masse, le séchage durant par exemple une vingtaine d'heure, puis sont cuits. Les structures monolithes peuvent consister en des monolithes élémentaires que l'on assemble par collage céramique selon toute méthode connue de l'Homme du métier pour constituer par exemple le filtre à particules ayant la géométrie désirée pour pouvoir être installé sur la ligne d'échappement du moteur diesel ou la membrane de filtration. Lorsqu'il convient d'assembler plusieurs structures monolithes élémentaires, l'assemblage est réalisé après la cuisson des extrudés. On peut aussi très avantageusement utiliser directement un monolithe élémentaire monobloc de forme adaptée selon l'application, par exemple à section circulaire ou rectangulaire.

Le filtre céramique obtenu selon le procédé de l'invention est caractérisé par microscopie électronique à balayage qui permet de démontrer l'intimité de contact entre la matière de bouchage, c'est-à-dire des bouchons, et les parois poreuses séparant les canaux ainsi que la pénétration d'une partie de la matière de bouchage dans la porosité desdites parois. La surface de contact entre la matière de bouchage ou bouchons et les parois poreuses séparant les canaux est d'au moins 80%, de préférence comprise entre 90 et 100%, c'est-à-dire qu'au moins 80%, de préférence de 90 à 100% de la périphérie des bouchons apte à épouser la forme des canaux est en contact intime avec la paroi des canaux.

Les exemples qui suivent sont donnés à titre d'illustration de l'invention sans en limiter la portée.

### Exemple 1 : préparation d'un filtre céramique à base d'un monolithe nid d'abeille en carbure de silicium

On utilise un monolithe nid d'abeille en carbure de silicium présentant des canaux de section carrée, séparés les uns des autres d'une paroi poreuse d'épaisseur 0,4 mm. Ledit monolithe présente 200 canaux par pouce carré (soit 31 canaux par cm²). Ce monolithe se présente sous forme d'extrudés, qui ont été séchés à 110°C puis cuits à une température de 1450°C sous air. On procède d'abord à une étape de numérisation des faces d'extrémité consistant à placer le monolithe céramique sous une caméra numérique. L'image recueillie est traitée informatiquement pour déterminer le centre des canaux à boucher. On applique ensuite sur chacune des faces d'extrémité du monolithe un film adhésif en polypropylène non perforé. Une première face d'extrémité recouverte dudit film est perforée par irradiation au moyen d'un faisceau laser CO₂, d'une longueur d'onde de 10640 nm ayant une fréquence d'impulsion pouvant aller de 100 Hz à 10 KHz et une puissance réglable de 100 W maximale, aux endroits déterminés lors de l'étape de numérisation des faces. L'appareillage utilisé pour réaliser à la fois l'étape numérique de reconnaissance visuelle des faces d'extrémité et l'étape de perforation au faisceau laser est commercialisé par la société Renaud Laser et est décrit dans la demande de brevet FR 2.842.131 ou la demande US 2005-205539 dont le contenu est incorporé ici par référence. Lorsque ledit film recouvrant ladite première face d'extrémité est correctement perforé, le monolithe est retourné au moyen d'un bras articulé pour perforer le film recouvrant la deuxième face d'extrémité du monolithe céramique de la même manière que s'est effectuée la perforation du film recouvrant la première face.
On utilise un ciment comme matière de bouchage comprenant 89,5% en poids de carbure de silicium dont 30% poids de la composition est constitué d'un grain ayant une taille moyenne comprise entre 6 et 8 micromètres, 10% poids d'un mélange de 50 parties d'alumine, 5 parties de zircone, 45 parties de silice, 0,2% poids d'un plastifiant cellulosique (carboxyméthylcellulose) et 0,3 % poids d'un agent thixotrope (xanthane). Une suspension contenant le ciment et de l'eau, l'eau représentant 20 % poids de la masse minérale du ciment, ayant une viscosité de 35 Pa.s, est placée dans une coupelle. L'extrémité du monolithe, opposée à celle que l'on veut boucher, est saisie par une tête de préhension munie d'un joint gonflable permettant d'assurer l'étanchéité sur le contour du monolithe entourant ladite extrémité du monolithe. La tête de préhension est raccordée à une pompe à vide par l'intermédiaire de laquelle est créée une dépression dans le monolithe (5.10⁻³ bar). Le monolithe est descendu dans la coupelle contenant la barbotine de ciment, dosée volumétriquement et répartie de façon homogène par l'action d'un vibreur. L'étape d'aspiration en elle-même pour boucher les canaux dure environ 5 secondes. Le vide est ensuite cassé afin de retirer le monolithe de la tête de préhension raccordée à la pompe à vide, le film de la face d'extrémité, bouchée par le ciment, est retiré. Cette température permet le durcissement des bouchons formés à l'extrémité du monolithe. Le monolithe est retourné de façon à répéter la même opération de bouchage sur l'autre face d'extrémité du monolithe. La coupelle est de nouveau remplie par une suspension contenant du ciment, ayant la composition indiquée ci-dessus, et de l'eau. L'extrémité bouchée du monolithe est saisie par une tête de préhension raccordée à une pompe à vide par l'intermédiaire de laquelle est créée une dépression dans le monolithe (5.10⁻³ bar). Après cette deuxième étape d'aspiration, le vide est cassé, le monolithe est débarassé de la tête de préhension et le film est retiré à la main. La finition des bouchons est assurée par une désémailleuse. Le monolithe est ensuite placé sur une bande transporteuse à créneaux afin de présenter ses faces d'extrémité à des lampes infra-rouges (70 °C) assurant le séchage des bouchons de façon continue pendant 5 minutes. Le séchage est suivi d'une étape de cuisson à 1200°C, pendant 2 heures, dans un four à passage assurant le frittage des bouchons et du ciment. On obtient un filtre céramique dont les bouchons à l'une ou l'autre des extrémités des canaux ont une longueur de l'ordre 5 mm. Ce filtre est analyé par microscopie électronique à balayage (MEB) : le cliché de l'analyse MEB montre une surface de contact entre les bouchons et les parois poreuses séparant les canaux de 92%.

### Exemple 2 : évaluation du filtre céramique à base d'un monolithe nid d'abeille en carbure de silicium préparé selon l'exemple 1 dans la filtration des particules carbonées contenues dans le gaz d'échappement d'un moteur Diesel

On utilise un monolithe nid d'abeille en carbure de silicium présentant des canaux de section carrée, séparés les uns des autres d'une paroi poreuse d'épaisseur 0,4 mm et dont les canaux ont été bouchés selon la méthode décrite dans l'exemple 1. Ledit monolithe se présente sous forme d'un cylindre de 6 pouces (soit 15,24 cm) de long sur 5,66 pouces (soit 14,38 cm) de diamètre dont les faces sont constituées de 200 canaux par pouce carré soit 31 canaux par cm². Le monolithe à tester est entouré d'une couche isolante (interam) et placé dans une enveloppe (ou canning). L'enveloppe est ensuite montée sur la ligne d'échappement en aval d'un catalyseur d'oxydation lui-même placé en aval d'un moteur Diesel.
Pour les tests, on a utilisé un moteur Diesel de 2 litres de cylindrée équipé d'une rampe commune haute pression d'injection du carburant (common rail). Le carburant utilisé est un gazole commercial contenant 350 ppm de soufre et additivé avec 400 ppm de l'additif Octel Octimax 4810. L'ensemble formé par le moteur et la ligne d'échappement est intégré dans une unité de banc moteur. Le filtre à particules (FAP) est chargé en particules carbonées polluantes présentes dans la ligne d'échappement du moteur Diesel fonctionnant sur un point générant beaucoup de particules carbonées. La régénération du FAP est favorisée par la présence d'un catalyseur d'oxydation placé en amont du FAP. Ledit catalyseur crée une exothermie temporaire par oxydation d'hydrocarbures post-injectés permettant d'accéder à un niveau de température suffisant pour l'oxydation catalytique desdites particules, régénérant ainsi le FAP. Le pilotage du banc moteur et les basculements automatiques chargement du FAP en particules / régénération du FAP sont gérés par le logiciel MORPHEE.
La masse de particules carbonées polluantes présentes dans la ligne d'échappement du moteur Diesel est accessible par la mesure de fumées, facilement automatisable et bien corrélée à la masse de particules. La mesure de fumées est effectuée à l'aide d'un fumimètre AVL 415S placé en aval du FAP et est donnée par l'indice Bosch variant sur une échelle de 0 à 10. Cette mesure consiste à prélever en aval du FAP une quantité de gaz d'échappement et la fraction gazeuse prélevée est poussée sur un papier filtre afin qu'une cellule détecte la coloration (mesure du niveau de gris) obtenue sur le papier filtre. Cette mesure permet ainsi de déterminer le rendement de filtration du FAP.

A chaque cycle chargement/régénération du FAP est réalisée une mesure de fumée effectuée en aval du FAP. L'ensemble des mesures de fumées indiquent un niveau d'émission nul ou extrêmement faible : les valeurs relatives de l'indice Bosch mesurées par la cellule sont comprises entre 0 et 0,14 dans une échelle variant de 0 à 10, la valeur 0 correspondant à l'absence de coloration du papier filtre et la valeur 10 correspondant à une coloration noire avec échappement d'une fumée opaque.
Sur la totalité des cycles chargement/régénération du FAP réalisés, l'ensemble des valeurs de l'indice Bosch indiquées par la mesure de fumée est égal à 0,01 correspondant à une efficacité globale de filtration d'environ 99,8%. Le filtre a démontré une tenue sur banc moteur durant 53 cycles de chargement à 10g/l suivis de régénérations. En estimant qu'un chargement à 7g/l équivaut à environ 800 km de roulage, ce FAP a donc résisté, sans détérioration des bouchons, à approximativement 61000 km de roulage dans des conditions de température allant de 200°C lors de la phase de chargement à 1100°C lors de la phase de régénération.

## Revendications

1. Procédé pour produire un filtre céramique en nid d'abeille à partir d'un matériau céramique poreux en nid d'abeille comportant une pluralité de canaux s'étendant à travers lui d'une face d'extrémité à une autre face d'extrémité, ledit procédé comportant au moins les étapes consistant à :
a) munir chaque face d'extrémité du matériau en nid d'abeille d'un film perforé dont les perforations, réalisées par irradiation dudit film aux endroits voulus par un rayonnement énergétique, sont telles que les canaux traversant le matériau sont alternativement ouverts à l'une ou l'autre de leurs faces d'extrémité de sorte que, pour chaque canal ouvert à une face d'extrémité, les canaux adjacents sont fermés, et à
b) introduire, par aspiration, à travers les perforations du film appliqué à chaque face d'extrémité une matière de bouchage dans les canaux ouverts afin d'obtenir un filtre céramique dont les canaux qui ne sont pas bouchés sur l'une des faces d'extrémité le sont sur l'autre face d'extrémité.

2. Procédé selon la revendication 1 dans lequel l'étape a) est précédée d'une étape consistant à appliquer sur chacune des faces d'extrémité du matériau céramique un film non-perforé suivie d'une étape consistant à perforer ledit film non-perforé aux endroits voulus.

3. Procédé selon la revendication 1 ou 2 dans lequel la perforation du film est réalisée par irradiation dudit film aux endroits voulus par un rayonnement de type laser.

4. Procédé selon la revendication 3 dans lequel ladite étape de perforation est précédée d'une étape de reconnaissance visuelle de la face d'extrémité à perforer à l'aide d'une caméra numérique.

5. Procédé selon l'une des revendications 1 à 4 dans lequel la matière de bouchage est un ciment.

6. Procédé selon l'une des revendications 1 à 5 dans lequel l'aspiration est effectuée en créant une dépression dans ledit matériau par l'intermédiaire d'une pompe à vide.

7. Procédé selon l'une des revendications 1 à 6 dans lequel ledit matériau céramique est en cordiérite, en mullite, en carbure de silicium, en alumine alpha, en nitrure de silicium, en titanate d'aluminium ou en phosphate de zirconium.

8. Procédé selon l'une des revendications 1 à 7 dans lequel les bouchons constitués de matière de bouchage sont essentiellement localisés sur la portion terminale de chacun des canaux.

9. Procédé selon l'une des revendications 1 à 8 dans lequel on réalise l'étape b) en introduisant d'abord la matière de bouchage dans les canaux aux extrémités d'une première face d'extrémité, en séchant les bouchons ainsi formés dans lesdits canaux, puis en introduisant la matière de bouchage dans les canaux aux extrémités de ladite deuxième face d'extrémité.

10. Procédé selon l'une des revendications 1 à 9 tel qu'il comporte une étape c) consistant en une étape de cuisson.

11. Procédé selon l'une des revendications 1 à 10 tel qu'il comporte une étape d'introduction d'une phase catalytiquement active dans le filtre céramique après la mise en oeuvre de l'étape b).

12. Procédé selon l'une des revendications 1 à 11 dans lequel ledit matériau céramique poreux en nid d'abeille se présente sous la forme d'extrudés cuits.

13. Utilisation du filtre céramique préparé selon le procédé selon l'une des revendications 1 à 12 comme filtre à particules pour les gaz d'échappement des moteurs diesel.

14. Utilisation du filtre céramique préparé selon le procédé selon l'une des revendications 1 à 12 comme membrane pour la filtration d'effluents liquides ou gazeux.
